# EUROPEAN PATENT APPLICATION

(11) **EP 1 931 101 A1**
(43) Date of publication of application: **11.06.2008**
(21) Application number: 06125394.4
(22) Date of filing: 05.12.2006
(51) Int. Cl.: H04L 29/06, H04J 3/06, H04L 12/56

(54) **Time synchronisation in a computer based process control system**

(71) Applicant: ABB RESEARCH LTD., 8050 Zürich (CH)
(72) Inventor: Hansen, Kai, N-1375, Billingstad (NO); Kalland, Lars, N-1361, Billingstad (NO)
(74) Representative: Dahnér, Christer

(57) **Abstract**

A computer based control system (10) includes a central clock (12), a set of local process control devices (18, 20, 22) controlling a process (P), each provided with a local clock, and a time data application determining device (22). This device (22) comprises a synchronisation approach determining unit that receives a process state indicator indicating that the process (P) is in a state which will lead to a lot of traffic in the system, determines based on the indicator if a local time synchronisation approach should be activated or not, provides for updating of the local time keeping unit of local process control devices (22) in the set according to the approach, if the local time synchronisation approach is selected.

## Description

### TECHNICAL FIELD OF THE INVENTION

The present invention relates to the field of time synchronisation in a computer based process control system. The present invention more particularly relates to a method, device and computer program product for determining if to apply time data provided by a central time data source in a computer based control system as well as to such a computer based control system for controlling a process.

### DESCRIPTION OF RELATED ART

In some industrial applications it is critical that accurate time is kept locally in local process control devices provided in a computer based process control system. It is also critical that two or more such devices have the same time value within a narrow fluctuation area.

This is normally solved through providing a central clock in the system that sends out time data to the local process control devices via a network. This time data is then used to synchronize the local clocks of these local process control devices. The way the actual updating of these local clocks is performed may vary, but it will incorporate some kind of measurement and an estimate of the time delay for the time data to transverse the network. Because time delay may vary in this network, and if not correctly estimated, it will contribute to the inaccuracy of the local clock update.

There are several patents relating to the handling of the problem of network transversal jitter, with various suggested solutions on how to minimize this. See for instance "Time synchronization in computer network" by Johannessen and Skeie (W002054662).

WO 01/95550 describes an integrated network element and time server for distribution of time information in a computer network. The network element comprises means for routing data packets between communication ports, as well as a local clock and means for generating time update request packets and time update reply packets. The tight integration of communication services and time services enables the integrated network element and time server to distribute time update information while avoiding inaccuracies resulting from switching or routing operations. Also described is a method for synchronizing the local clocks of nodes in a communication network, taking advantage of the properties of the integrated network element and time server. The method provides automatic configuration of a time update structure in the network, so that time update information is distributed from one or more master time servers, with integrated network element and time servers working as slave time servers passing the time update information on throughout the network.

WO 02/054661 describes a method for identifying inaccurate time measurements in a local area network. The local area network comprises a sending device, such as a time client, a destination device, such as a timeserver, and a switching device and/or a store-and-forward device. A time request packet is rejected if it arrives at the time client or timeserver within a given or calculated minimum distance from the preceding network packet. The time request packet is also rejected if it falls outside a set of calculated error limits based on a set of estimates. Those estimates are kept in the time client memory and updated according to a given set of rules.

In a switched network, there will be no collisions, but depending on the network architecture, there may be certain network segments that will be shared, and thus may present a bottleneck for network packets. Store-and-forward type switches are common in use, and they queue up frames for each droplink. Priority mechanisms enable high priority frames of sneaking in the queue, but always after the ones that are currently being processed. In addition, several Ethernet based process protocols use highest priority for their process Ethernet frames, which then lead to high priority time synchronization frames ending up in the queue.

Therefore there is room for improvement in relation to local clock updating in these types of systems.

### SUMMARY OF THE INVENTION

The present invention is therefore directed towards improving local clock updating in a process control system.

One object of the present invention is therefore to provide a method for determining if to apply time data provided by a central time data source in a computer based control system, which method provides an improved local time updating.

This object is according to a first aspect of the present invention achieved through a method for determining if to apply time data provided by a central time data source in a computer based control system controlling a process via a set of local process control devices, each provided with a local time keeping unit, comprising the steps of:
receiving a process state indicator indicating that a process being controlled is in a state which will lead to a lot of traffic, at least in a section of the system where the set of local process control devices are provided,
determining based on said process state indicator if a local time synchronisation approach should be activated or not, and
providing for updating of the local time keeping unit of at least one local process control device in the set according to said local time synchronisation approach if the local time synchronisation approach is selected.

Another object of the present invention is to provide a device for determining if to apply time data provided by a central time data source in a computer based control system, which device provides an improved local time updating.

This object is according to a second aspect of the present invention achieved through a device for determining if to apply time data provided by a central time data source in a computer based control system controlling a process via a set of local process control devices, each provided with a local time keeping unit, comprising:
a synchronisation approach determining unit configured to
   receive a process state indicator indicating that a process being controlled is in a state which will lead to a lot of traffic, at least in a section of the system where the set of local process control devices are provided,
   determine based on said process state indicator if a local time synchronisation approach should be activated or not, and
   provide for updating of the local time keeping unit of at least one local process control device in the set according to said local time synchronisation approach if the local time synchronisation approach is selected.

Another object of the present invention is to provide a computer program product for determining if to apply time data provided by a central time data source in a computer based control system, which computer program product provides an improved local time updating.

This object is according to a third aspect of the present invention achieved through a computer program product for determining if to apply time data provided by a central time data source in a computer based control system controlling a process via a set of local process control devices, each provided with a local time keeping unit, comprising computer program code to make a time data application determining device to perform, when said code is loaded into said time data application determining device:
receive a process state indicator indicating that a process being controlled is in a state which will lead to a lot of traffic, at least in a section of the system where the set of local process control devices are provided,
determine based on said process state indicator if a local time synchronisation approach should be activated or not, and
provide for updating of the local time keeping unit of at least one local process control device in the set according to said local time synchronisation approach if the local time synchronisation approach is selected.

Another object of the present invention is to provide a computer based control system for controlling a process that provides an improved local time updating.

This object is according to a fourth aspect of the present invention achieved through a computer based control system for controlling a process comprising:
a central time data source providing time data,
a set of local process control devices for controlling the process and each provided with a local time keeping unit, and
a time data application determining device comprising:
   a synchronisation approach determining unit configured to
      receive a process state indicator indicating that the process being controlled is in a state which will lead to a lot of traffic, at least in a section of the system where the set of local process control devices are provided, determine based on said process state indicator if a local time synchronisation approach should be activated or not, and
      provide for updating of the local time keeping unit of at least one local process control device in the set according to said local time synchronisation approach if the local time synchronisation approach is selected.

The present invention has many advantages. The present invention guarantees that possibly incorrect application of time data from the central clock source is avoided and instead a safer approach is used. In this way it is easier to meet the safety margin in relation to system requirements. The present invention improves the accuracy of time keeping by using information available from the system. It attempts to identify the situations in which an unwanted jitter in network transversion time is likely to happen, thus enabling any actions to be taken regarding the time synchronization update that is deemed appropriate.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a simplified computer based control system comprising a central time data source and a central control device connected to a number of local process control devices via a switch,
fig. 2 shows a block schematic of one of the local process control devices which also functions as a time data application determining device according to the present invention, fig. 3 shows a flow chart outlining a number of method steps taken in a method for determining if to apply time data according to the present invention, and
fig. 4 schematically shows a computer program product in the form of a CD ROM disc comprising computer program code for performing the method of the present invention.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

A system for process control is typically an object based computerised system for controlling a process or perhaps part of a process. The process controlled in relation to the present invention is a process which has strict requirements regarding the clocks used in the different local and central devices for process control. One such process is an electrical power generation and supply process. However it should be realised that the present invention is not limited to this particular type of process, but may be used in any process or part of a process, where there are such strict clocking requirements. Examples of other types of processes are water purification and distribution processes, oil and gas production and distribution processes, petrochemical, chemical, pharmaceutical and food processes, and pulp and paper production processes. These are just some examples of processes where the system can be applied. There exist countless other processes.

A process, or a part of a process, may be controlled via a type of central control device in the form of a control server, which then typically communicates with a number of local process control devices for providing control of a process. These local process control devices are also often denoted field devices. Field devices may be different entities that influence or measure different properties of the technical process, like such things as a power switch, a fuse and a transformer etc. In such a system there may furthermore be provided one or more central control devices of another type in the form of controllers having some local software for controlling one or more field devices. A controller may here be a Process Controller or Programmable Logic Controller (PLC). Such a controller would then be provided between the control server and the field devices.

The local process control devices are often provided in a level of the system that is denoted a field bus level. In higher levels the controller may be communicating with control servers and in even higher levels work stations like operator and/or engineering terminals may be provided. Today most levels above the field bus level are communicating using Ethernet based TCP/IP communication, while the field bus level may be provided through an Ethernet IP network. It may also be a PROFINET network Foundation Fieldbus HSE and Modbus. However it is also possible that this level is provided through wireless communication. The wireless communication may then be provided through a number of communication standards. Examples are IEEE 802.15.4 Wireless Hart, WLAN 802.11, Bluetooth, ZigBee or WISA. It is furthermore possible that the whole system is provided through wireless communication.

As mentioned earlier, there are often strict timing requirements, which necessitate the use of a central time data source or central clock source for all the devices involved in the control of at least a part of the process. This central clock source is also often denoted a master clock or time server and provides time data that is used by the different devices in adjusting their local time keeping units or local clocks.

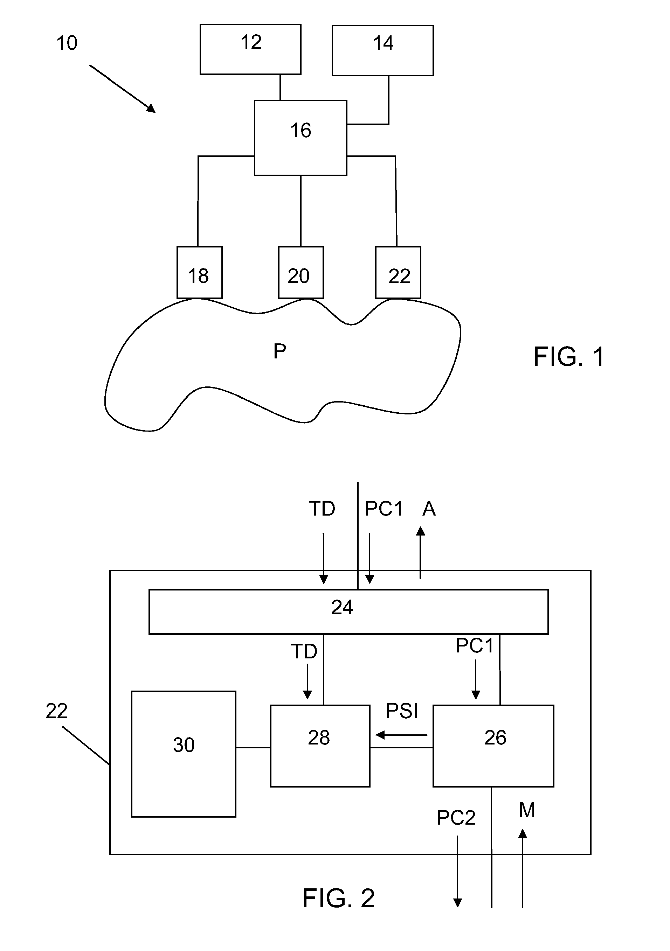

Fig. 1 schematically shows a simplified computer based control system 10 that is provided according to the above mentioned principles. The system 10 includes a central clock source 12 and a central control device 14, which are both connected to a number of local process control devices 18, 20 and 22 via a control network. The central control device 14 may be either a control server or a controller. The control network is a distribution means for distributing the time data from the central clock source 12 to the different network entities 14, 18, 20 and 22 as well as for distributing control commands, event reports and other control data that is normally provided in a control system between the central control device 14 and the local process control devices 18, 20 and 22. The local process control devices 18, 20 and 22 make up a set of local process control devices that are provided in the same section of the network, for instance connected to a common bus. They furthermore provide control of the same part of a process. It should also be realised that the local process control devices 18, 20, 22 may exchange data between each other.

In order to simplify the understanding of the present invention the network here only includes a switch 16. It should however be realised that the network may be much larger and include several different entities and levels in line with what has been described above. Each of the local process control devices 18, 20 and 22 are here connected to a process P for providing control of it.

Fig. 2 shows a block schematic of one local process control device 22 according to the present invention. According to one embodiment of the present invention all the local process control devices have the configuration shown in fig. 2. In this embodiment each of the local process control devices 18, 20, 22 also functions as a device for determining if to apply time data provided by the central clock source. This type of device is also denoted a time data application determining device. The local process control device 22 includes a network interface 24 via which it receives time data TD from the central clock source as well as process control commands PC1 from the central control device. This interface 24 is in turn connected to a process control unit 26, which provides control of the process PC2 as well as obtains measurements M of the process. The local process control performed by the process control unit 26 may then necessitate the generating of event and alarm messages A that may be sent to the central control device via the interface 24. To the interface 24 there is furthermore connected a clock synchronising unit 28. The clock synchronising unit 28 does in this embodiment also function as a synchronisation approach determining unit 28, which receives the time data TD from the time source and which when operating normally as an ordinary clock synchronising unit adjusts a local time keeping unit or local clock 30 in order to make the local clock 30 operate within a tightly set time margin in relation to the central clock. This is normally done through adjusting the frequency of the local clock 30 based on time data received from the central clock either by increasing the clock frequency or decreasing the clock frequency so that it does not deviate more than a required time margin necessitated by the process being controlled.

When controlling some processes, like for instance electrical power generation and supply processes, it is as mentioned above often very important that the different local process control devices that are often directly interfacing the process, operate according to the same central clock and that their local clocks have very small deviations from this central clock. This central clock is in the present invention provided by the central clock source shown in fig. 1. This central clock source then sends out time data, which is received by the local process control devices of the set. It is possible to determine the delay of the network under normal network conditions, i.e. when there is no congestion in the network. When the local process control devices therefore receive time data during normal network conditions, they can determine when this time data was sent based on this known delay of the system and apply this knowledge when re-synchronising their local clocks. This then ensures that they operate within the strict time requirements.

However, the controlled process can at times reach a state, where a lot of data has to be transferred in the network. One example of this is that the process reaches an alarm state. An alarm state may occur because of various reasons, where one in the field of electrical power generation and supply may be that a transformer fails. In this case it is possible that all local process control devices in a section of the system have to send alarm reports to the central control device. As there may be many such local process control devices that may need to do this at the same time, this sending of data may lead to a traffic overload in the network. The network traffic patterns therefore affect the transmission delay of data in the network and therefore also of the time data sent from the central clock source. This in turn means that the delay of the network is no longer as anticipated by the local process control devices and that if they apply time data that has been sent when such a state is present, their internal clocks will actually not be synchronized with the central clock, but will rather get their synchronization degraded. The process conditions thus consumes high bandwidth on the communication channel between the central control device and local process control devices and may thus introduce a larger - and unwanted - inaccuracy.

This means that the accuracy requirements may not be fulfilled. Moreover, this will then most likely also happen at a time when the accuracy is needed the most, for instance in an alarm state. This situation is not satisfactory.

Now a way to solve this situation according to one embodiment of the present invention will be described with reference being made to fig. 1, 2 and 3, where the latter shows a block schematic of one of the local process control devices, which is here local process control device 22. In this embodiment of the present invention all local process control devices of the set are furthermore configured in the same way. They are all time data application determining devices.

In operation the process control unit 26 interfaces the process P for controlling a part of it, in doing so it may receive control signals PC1 form the server 14 and process these for providing control signals PS2 that are to be applied on the process P. It also measures and evaluates measurement data M obtained from the process P. Under this process control it uses time data provided by the local clock 30. When performing this process control it may furthermore identify that the process or at least the part of the process P, which is controlled in the section of the system 10 where the set of local process control devices 18, 20, 22 are provided, reaches a state, which will lead to a lot of traffic in at least this section of the network 10. The process control unit 26 then generates a process state indicator PSI, which it sends to the synchronisation approach determining unit 28. In its simplest form, this signal may be generated automatically when the process enters an alarm state for which the local process control unit 26 generates an alarm signal A that is to be sent to the central control device 14. It may however be some other state, which it may identify as a state that will lead to a lot of traffic on the network. The process control unit 26 can thus have direct knowledge about the state of the process being controlled, for instance because of performed measurements. As an alternative it may obtain this knowledge from distributed information about the state, which can comprise process data or specific information originating from process data.

Before the synchronisation approach determining unit 28 receives the process state indicator PSI it functions as a normal local time synchronising unit that uses an ordinary and known approach for updating the local clock 30. When the synchronisation approach determining unit 28 then receives this process state indicator PSI, step 32, it will start to apply its synchronisation approach determining functionality and first determines if a local time synchronisation approach should be activated or not, and if it is not, step 34, it retains its original approach, step 36, i.e. to synchronise the local clock 30 according to time data TD received from the central clock source 12. In its simplest form the synchronisation approach determining unit 28 will automatically select to apply the local time synchronisation approach when the process state indicator PSI is received. This can be the case if there for instance only exists one such indicator that indicates an alarm state. If however, there are several different types of indicators it may decide to retain the original approach or change to the local time synchronisation approach based on the type of indicator.

If the decisions is made to apply the local time synchronisation approach, step 34, the synchronisation approach determining unit 28 then sets a local time T during which the local time synchronisation approach should be applied. This time may be set depending on type of process state indicator PSI. The time T is typically set to be long enough so that all possible alarm and event data related to the process state have been sent from the local process control devices in the set during the time interval defined by this time T. Thereafter the synchronisation approach determining unit 28 investigates the time T, and if it has expired, step 38, then it once again returns to applying the original approach, step 40, while if it has not, step 38, it provides for an updating of the local clock 30 according to the local time synchronisation approach, which is here done through the synchronisation approach determining unit 28 actually synchronising the local clock 30 according to the local time synchronisation approach, step 42. It may here also provide information about how time data TD received from the central clock source 12 during this time T is to be applied, whereupon the synchronisation approach determining unit 28 goes back and again investigates if the time T has expired, step 38.

In this way it is guaranteed that possibly incorrect application of time data TD from the central clock source 12 is avoided and instead a safer approach is used. In its simplest form this approach involves not doing anything, but keeping the setting of the local clock 30 that existed before the reception of the process state indicator PSI together with stopping the local clock 30 from being updated based on any time data received from the central clock source 12. Here any time data TD that may be received from the central time source 12 is disregarded. Thus the local clock 30 functions in the same way as before the process state indicator PSI was received.

As an alternative the time data received from the central clock may be used, but adjusted so that the changed delay through the network is considered. This changed delay may here be estimated. The adjusting may be done through weighting the time data from the central clock, where the weight may be set according to the estimated delay. It is also possible to filter the difference between the time data from the central clock and the time of the local clock for obtaining an adjusted time difference to be used when updating the local clock. As another alternative it is possible that updating of the local clock is based on time data received from at least one other local process control device in the set. Then time data may be received from more than one other entity, like for instance from the other local process controlled devices in the set. Here all this data may be used, possibly together with own locally generated time data as well as possibly together with adjusted time data from the central clock source, for determining how to synchronise the local clock 30. In this determination of how to synchronise the local clock averaging or some other suitable operation, like for instance weighting, of this collected time data can be performed in order to provide time data that is to be used for synchronising the local clock.

There are number of further variations that may be made of the above described embodiment. It should be realised that the synchronisation approach determining unit 28 need not select the time T during which the local synchronisation approach is applied. This time may be provided by the local processing unit 26. As an alternative it is also possible that the local processing unit 26 instead sends a new process state indicator PSI, which indicates that the above mentioned state no longer applies and that another state, for instance a safe normal state, is applicable. The synchronisation approach determining unit 28 may then stop the applying of the local synchronisation approach once this new process state indicator is received.

It is not necessary that all local process control devices function as time data application determining devices. It is for instance possible that only one functions as such a device. The local process control device having this functionality will then provide for updating of all the local time keeping units of all local process control devices in the set and stop these local time keeping units from being updated based on time data from the central time data source through ordering the other devices in the set to activate the local synchronisation approach. It may then receive the process state information from its own local processing unit, but it may also receive it from the other local process control devices in the set. When ordering the activation of the local synchronisation approach, it may order them to retain there original settings, i.e. do nothing, or to provide them with time data that is to be used for local synchronisation.

It is furthermore possible that the time data application determining device is provided in some other entity in the system, for instance in a switch, a router or in the central control device. In this case the time data application determining device will receive the process state indicator from one or more of the local process control devices and order all of them to apply the local synchronisation approach. It should here be realised that all the above described variations of the local time synchronisation approach can also be made in these variations of the placing of the time data application determining device.

The present invention guarantees that possibly incorrect application of time data from the central clock source is avoided and instead a safer approach is used. In this way it is easier to meet the safety margin in relation to system requirements. The first described embodiment, where each local process control device in the set has time data application determining functionality has another advantage. Since the functionality is provided locally in each local process control device, this solution does not add to the traffic load on the network, which is already high. In its simplest form this approach involves not doing anything, but keeping the local clock functioning in the same way as it did before the process state indicator was received. The present invention improves the accuracy of time keeping by using information available from the system. It attempts to identify the situations in which an unwanted jitter in network transversion time is likely to happen, thus enabling any actions to be taken regarding the time synchronization update that is deemed appropriate.

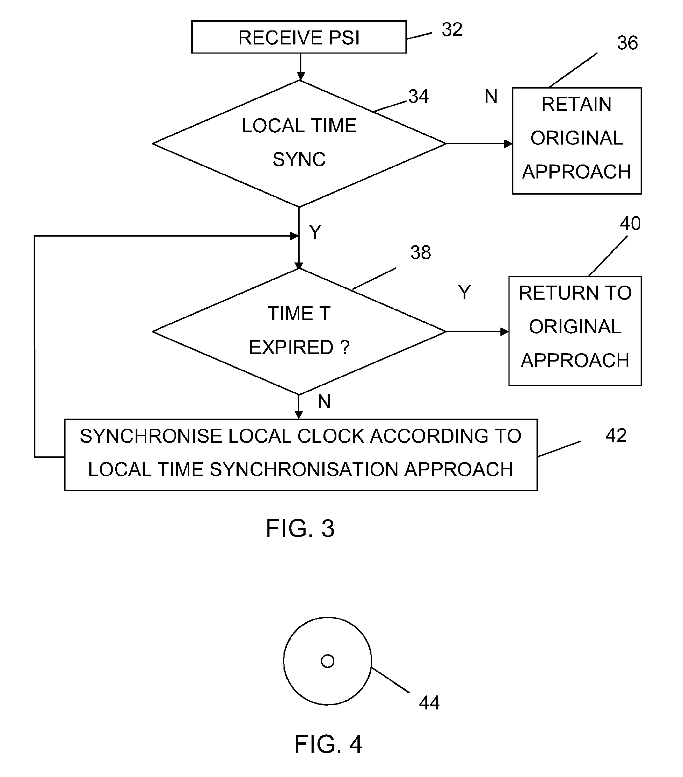

The synchronisation approach determining unit described above may be provided through a computer program code running on a network entity, like a switch a router and especially on a local process control device and using one or more processors and a program memory where this code is stored. This program code may also be provided as a computer program product, for instance in the form of one or more data carriers carrying computer program code for performing the functionality of the present invention when being loaded into the corresponding device. One such carrier 44, in the form of a CD ROM disc is generally outlined in fig. 4. It is however feasible with other data carriers, like diskettes, memory sticks or USB memories. The computer program code can furthermore be provided as pure program code on an external server and downloaded from there for provision in the device that is to receive it.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

## Claims

1. Method for determining if to apply time data (TD) provided by a central time data source (12) in a computer based control system (10) controlling a process (P) via a set of local process control devices (18, 20, 22), each provided with a local time keeping unit (30), comprising the steps of:
receiving (32) a process state indicator (PSI) indicating that a process (P) being controlled is in a state which will lead to a lot of traffic, at least in a section of the system where the set of local process control devices are provided,
determining (34) based on said process state indicator (PSI) if a local time synchronisation approach should be activated or not, and
providing (42) for updating of the local time keeping unit (30) of at least one local process control device (22) in the set according to said local time synchronisation approach if the local time synchronisation approach is selected.

2. Method according to claim 1, wherein the step of determining (34) if a local time synchronisation approach should be activated or not comprises automatically selecting the local time synchronisation approach if the process state indicator (PSI) is received.

3. Method according to claim 1 or 2, wherein the step of providing for updating comprises providing an indication of how time data (TD) received from the central time data source (12) is to be applied.

4. Method according to claim 3, wherein the providing an indication of how time data from the central time data source is to be applied comprises providing a stopping of the local time keeping unit (30) of the local process control device (22) from being updated based on any time data (TD) received from the central time data source (12) as long as the local time synchronisation approach is activated.

5. Method according to claim 3 or 4, wherein the local time synchronisation approach involves keeping the settings of the local time keeping unit (30) of at least one local process control device that existed before the process state indicator was received.

6. Method according to any of claims 1 - 3, wherein the local time synchronisation approach involves updating the local time keeping unit (30) based on time data received from at least one other local process control device in the set.

7. Method according to any previous claim, wherein the process state indicator is received from a process control unit (26) provided in one of the local process control devices (22) in said set.

8. Method according to any previous claim, wherein the local time synchronisation approach when applied is in effect for a predetermined length of time (T), after which it will cease to apply.

9. Method according to any previous claim, wherein the method steps are applied locally in at least one local process control device.

10. Method according to any of claims, wherein the method steps are performed in a network entity separate from the local process control devices (18, 20, 22).

11. Method according to claim 10, wherein the method steps are performed in a central control device (14) of the system.

12. Method according to claim 10, wherein the method steps are performed in a network traffic control entity (16), for instance a router or a switch.

13. Device (22) for determining if to apply time data (TD) provided by a central time data source (12) in a computer based control system (10) controlling a process (P) via a set of local process control devices (18, 20, 22), each provided with a local time keeping unit (30), comprising:
a synchronisation approach determining unit (28) configured to
receive a process state indicator (PSI) indicating that a process (P) being controlled is in a state which will lead to a lot of traffic, at least in a section of the system where the set of local process control devices are provided,
determine based on said process state indicator (PSI) if a local time synchronisation approach should be activated or not, and
provide for updating of the local time keeping unit (30) of at least one local process control device (22) in the set according to said local time synchronisation approach if the local time synchronisation approach is selected,
stop the local time keeping unit (30) of this local process control device (22) from being updated based on any time data (TD) received from the central time data source (12) as long as the local time synchronisation approach is activated.

14. Device (22) according to claim 13, wherein the synchronisation approach determining unit (28) when determining if a local time synchronisation approach should be activated or not is configured to automatically select the local time synchronisation approach if the process state indicator (PSI) is received.

15. Device (22) according to claim 13 or 14, wherein the synchronisation approach determining unit (28) when providing for updating is configured to provide an indication of how time data (TD) received from the central time data source (12) is to be applied.

16. Device (22) according to claim 15, wherein the synchronisation approach determining unit (28) when providing an indication of how time data from the central time data source is to be applied is configured to provide for stopping the local time keeping unit (30) of the local process control device (22) from being updated based on any time data (TD) received from the central time data source (12) as long as the local time synchronisation approach is activated.

17. Device (22) according to claim 15 or 16, wherein the local time synchronisation approach involves keeping the settings of the local time keeping unit of at least one local process control device that existed before the process state indicator was received.

18. Device (22) according to any of claims 13 - 15, wherein the local time synchronisation approach involves updating the local time keeping unit (30) based on time data received from at least one other local process control device in the set.

19. Device (22) according to any of claims 13 -18, wherein the local time synchronisation approach when applied is in effect for a predetermined length of time (T), after which it will cease to apply.

20. Device (22) according to any of claims 13 - 19, wherein the process state indicator (PSI) is received from a process control unit (26) provided in one of the local process control devices (22) in said set.

21. Device (22) according to any of claims 13 - 20, wherein the synchronisation approach determining unit (28) is provided in a local process control device (22).

22. Device (22) according to claim 21, wherein said local process control device also provides the process state indicator (PSI).

23. Device (22) according to any of claims 13 - 22, wherein the synchronisation approach determining unit (28) is provided in a network entity separate from the local process control devices (18, 20, 22).

24. Device (22) according to claim 23, wherein the synchronisation approach determining unit is provided in a central control device (14) of the system.

25. Device (22) according to claim 23, wherein the synchronisation approach determining unit is provided in a network traffic control entity (16), for instance a router or a switch.

26. Computer program product (44) for determining if to apply time data (TD) provided by a central time data source (12) in a computer based control system (10) controlling a process via a set of local process control devices (18, 20, 22), each provided with a local time keeping unit (30), comprising computer program code to make a time data application determining device (22) to perform, when said code is loaded into said time data application determining device (22):
receive a process state indicator (PSI) indicating that a process (P) being controlled is in a state which will lead to a lot of traffic, at least in a section of the system where the set of local process control devices (18, 20, 22) are provided,
determine based on said process state indicator (PSI) if a local time synchronisation approach should be activated or not, and
provide for updating of the local time keeping unit (30) of at least one local process control device (22) in the set according to said local time synchronisation approach if the local time synchronisation approach is selected.

27. Computer based control system (10) for controlling a process (P) comprising:
a central time data source (12) providing time data (TD),
a set of local process control devices (18, 20, 22) for controlling the process (P) and
each provided with a local time keeping unit (30), and
a time data application determining device (22) comprising:
a synchronisation approach determining unit (28) configured to
receive a process state indicator (PSI) indicating that the process (P) being controlled is in a state which will lead to a lot of traffic, at least in a section of the system where the set of local process control devices (18, 20, 22) are provided, and
determine based on said process state indicator (PSI) if a local time synchronisation approach should be activated or not, and
provide for updating of the local time keeping unit (30) of at least one local process control device (22) in the set according to said local time synchronisation approach.

## Amended claims

### Amended claims in accordance with Rule 137(2) EPC.

**1.** Method for determining if to apply time data (TD) provided by a central time data source (12) in a computer based control system (10) controlling a process (P) via a set of local field devices (18, 20, 22) provided in a field bus level of the system, each field device being provided with a local time keeping unit (30), **characterised by** the steps of:
receiving (32) a process state indicator (PSI) generated by a field device in the set and indicating that at least a part of the process (P) being controlled by the field devices in the set is in a state which will lead to a lot of traffic, at least in the field bus level of the system where the set of field devices are provided,
determining (34) based on said process state indicator (PSI) if a local time synchronisation approach should be activated or not, and
providing (42) for updating of the local time keeping unit (30) of at least one field device (22) in the set according to said local time synchronisation approach if the local time synchronisation approach is selected.

**2.** Method according to claim 1, wherein the step of determining (34) if a local time synchronisation approach should be activated or not comprises automatically selecting the local time synchronisation approach if the process state indicator (PSI) is received.

**3.** Method according to claim 1 or 2, wherein the step of providing for updating comprises providing an indication of how time data (TD) received from the central time data source (12) is to be applied.

**4.** Method according to claim 3, wherein the providing an indication of how time data from the central time data source is to be applied comprises providing a stopping of the local time keeping unit (30) of the field device (22) from being updated based on any time data (TD) received from the central time data source (12) as long as the local time synchronisation approach is activated.

**5.** Method according to claim 3 or 4, wherein the local time synchronisation approach involves keeping the settings of the local time keeping unit (30) of at least one field device that existed before the process state indicator was received.

**6.** Method according to any of claims 1 - 3, wherein the local time synchronisation approach involves updating the local time keeping unit (30) based on time data received from at least one other field device in the set.

**7.** Method according to any previous claim, wherein the process state indicator is received from a process control unit (26) provided in one of the field devices (22) in said set.

**8.** Method according to any previous claim, wherein the local time synchronisation approach when applied is in effect for a predetermined length of time (T), after which it will cease to apply.

**9.** Method according to any previous claim, wherein the method steps are applied locally in at least one field device.

**10.** Method according to any of claims, wherein the method steps are performed in a network entity separate from the field devices (18, 20, 22).

**11.** Method according to claim 10, wherein the method steps are performed in a central control device (14) of the system.

**12.** Method according to claim 10, wherein the method steps are performed in a network traffic control entity (16), for instance a router or a switch.

**13.** Device (22) for determining if to apply time data (TD) provided by a central time data source (12) in a computer based control system (10) controlling a process (P) via a set of field devices (18, 20, 22) in a field bus level of the system, and each provided with a local time keeping unit (30), **characterised by**:
a synchronisation approach determining unit (28) configured to receive a process state indicator (PSI) generated by a field device in the set and indicating that at least a part of the process (P) being controlled by the field devices in the set is in a state which will lead to a lot of traffic, at least in the field bus level of the system where the set of field devices are provided, determine based on said process state indicator (PSI) if a local time synchronisation approach should be activated or not,
provide for updating of the local time keeping unit (30) of at least one field device (22) in the set according to said local time synchronisation approach if the local time synchronisation approach is selected, and
stop the local time keeping unit (30) of this field device (22) from being updated based on any time data (TD) received from the central time data source (12) as long as the local time synchronisation approach is activated.

**14.** Device (22) according to claim 13, wherein the synchronisation approach determining unit (28) when determining if a local time synchronisation approach should be activated or not is configured to automatically select the local time synchronisation approach if the process state indicator (PSI) is received.

**15.** Device (22) according to claim 13 or 14, wherein the synchronisation approach determining unit (28) when providing for updating is configured to provide an indication of how time data (TD) received from the central time data source (12) is to be applied.

**16.** Device (22) according to claim 15, wherein the synchronisation approach determining unit (28) when providing an indication of how time data from the central time data source is to be applied is configured to provide for stopping the local time keeping unit (30) of the field device (22) from being updated based on any time data (TD) received from the central time data source (12) as long as the local time synchronisation approach is activated.

**17.** Device (22) according to claim 15 or 16, wherein the local time synchronisation approach involves keeping the settings of the local time keeping unit of at least one field device that existed before the process state indicator was received.

**18.** Device (22) according to any of claims 13-15, wherein the local time synchronisation approach involves updating the local time keeping unit (30) based on time data received from at least one other field device in the set.

**19.** Device (22) according to any of claims 13 -18, wherein the local time synchronisation approach when applied is in effect for a predetermined length of time (T), after which it will cease to apply.

**20.** Device (22) according to any of claims 13 - 19, wherein the process state indicator (PSI) is received from a process control unit (26) provided in one of the field devices (22) in said set.

**21.** Device (22) according to any of claims 13 - 20, wherein the synchronisation approach determining unit (28) is provided in a field device (22).

**22.** Device (22) according to claim 21, wherein said field device also provides the process state indicator (PSI).

**23.** Device (22) according to any of claims 13 - 22, wherein the synchronisation approach determining unit (28) is provided in a network entity separate from the field devices (18, 20, 22).

**24.** Device (22) according to claim 23, wherein the synchronisation approach determining unit is provided in a central control device (14) of the system.

**25.** Device (22) according to claim 23, wherein the synchronisation approach determining unit is provided in a network traffic control entity (16), for instance a router or a switch.

**26.** Computer program product (44) for determining if to apply time data (TD) provided by a central time data source (12) in a computer based control system (10) controlling a process via a set of field devices (18, 20, 22) in a field bus level of the system, each provided with a local time keeping unit (30), **characterised by** computer program code to make a time data application determining device (22) to perform, when said code is loaded into said time data application determining device (22):
receive a process state indicator (PSI) generated by a field device in the set and indicating that at least a part of a process (P) being controlled by the field devices in the set is in a state which will lead to a lot of traffic, at least in the field bus level of the system where the set of field devices (18, 20, 22) are provided, determine based on said process state indicator (PSI) if a local time synchronisation approach should be activated or not, and
provide for updating of the local time keeping unit (30) of at least one field device (22) in the set according to said local time synchronisation approach if the local time synchronisation approach is selected.

**27.** Computer based control system (10) for controlling a process (P) comprising:
a central time data source (12) providing time data (TD),
a set of field devices (98, 20, 22) in a field bus level of the system for controlling the process (P) and each provided with a local time keeping unit (30), and
a time data application determining device (22) **characterised by**
said time data application determining device (22) comprising:
a synchronisation approach determining unit (28) configured to receive a process state indicator (PSI) generated by a field device in the set and indicating that at least a part of the process (P) being controlled is in a state which will lead to a lot of traffic, at least in the field bus level of the system where the set of field devices (18, 20, 22) are provided, and determine based on said process state indicator (PSI) if a local time synchronisation approach should be activated or not, and
provide for updating of the local time keeping unit (30) of at least one field device (22) in the set according to said local time synchronisation approach.
